# EUROPÄISCHE PATENTANMELDUNG

(11) **EP 4 424 754 A1**
(43) Veröffentlichungstag der Anmeldung: **04.09.2024**
(21) Anmeldenummer: 23159775.8
(22) Anmeldetag: 02.03.2023
(51) Int. Cl.: C08J 9/00, C08G 18/00, C08J 9/02, C09K 21/14, C08J 9/06, C08L 101/10, C08G 18/83

(54) **REAKTIONSGEMISCH ZUR HERSTELLUNG EINES BRANDSCHUTZELEMENTS, DARAUS HERGESTELLTES BRANDSCHUTZELEMENT UND VERFAHREN ZUR HERSTELLUNG EINES BRANDSCHUTZELEMENTS**

(71) Anmelder: Hilti Aktiengesellschaft, 9494 Schaan (LI)
(72) Erfinder: Wehner, Marius, 82061 Neuried (DE); Paetow, Mario, 86899 Landsberg am Lech (DE); Reineck, Marie, 86916 Kaufering (DE)
(74) Vertreter: Hilti Aktiengesellschaft Corporate Intellectual Property

(57) **Zusammenfassung**

Die vorliegende Erfindung betrifft ein schäumbares Reaktionsgemisch enthaltend ein alkoxysilanfunktionelles Polymer zur Herstellung von vorgeformten Brandschutzelementen sowie ein aus dem erfindungsgemäßen Reaktionsgemisch hergestelltes Brandschutzelement. Ferner betrifft die Erfindung ein Verfahren zur Herstellung eines Brandschutzelementes und ein Bauteil umfassend ein erfindungsgemäßes Brandschutzelement. Das Reaktionsgemisch umfasst ein alkoxysilanfunktionelles Polymer, welches mit alkoxyfunktionellen Silangruppen der allgemeinen Formel (I) terminiert ist und/oder diese als Seitengruppen entlang der Polymerkette aufweist.

## Beschreibung

Die vorliegende Erfindung betrifft ein schäumbares Reaktionsgemisch enthaltend ein alkoxysilanfunktionelles Polymer zur Herstellung von vorgeformten Brandschutzelementen sowie ein aus dem erfindungsgemäßen Reaktionsgemisch hergestelltes Brandschutzelement. Ferner betrifft die Erfindung ein Verfahren zur Herstellung eines Brandschutzelementes und ein Bauteil umfassend ein erfindungsgemäßes Brandschutzelement. Das Reaktionsgemisch umfasst ein alkoxysilanfunktionelles Polymer, welches mit alkoxyfunktionellen Silangruppen der allgemeinen Formel (I) terminiert ist und/oder diese als Seitengruppen entlang der Polymerkette aufweist.

Beim Verlegen von Leitungen, wie z.B. Rohrleitungen, elektrischen Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen Brandschutzabschottungsmaterialen, wie beispielsweise Brandschutzkissen, Brandschutzsteine und Produkte für Fugenanwendungen, eingebracht.

Derzeit basieren die meisten Brandschutzschaumprodukte, d. h. vor Ort hergestellte und vorgeformte Schaumstoffe, auf Polyurethan (PU). Polyurethan ist in Bezug auf Gesundheit, Sicherheit und Umwelt (HSE) bedenklich, da bei der Schaumerzeugung gefährliche Isocyanate verwendet werden. Aus diesem Grund besteht ein Bedarf an alternativen Materialtechnologien zur Herstellung von Brandschutzschaumprodukten, die Polyurethan in Hinblick auf HSE-Aspekte übertreffen und gleichzeitig die Anforderungen für Brandschutzanwendungen in Gebäuden erfüllen.

Außerdem ist es sehr wünschenswert, vorgeformte Brandschutzschäume für Anwendungen zu entwickeln, bei denen die Gebäudehülle noch offen ist (z. B. Fugenanwendungen). Dies hat zur Folge, dass solche vorgeformten Brandschutzschäume dem Außenklima und insbesondere Regenwasser ausgesetzt sein können. Daher ist die Wasserbeständigkeit eine zentrale Anforderung an solche vorgeformten Brandschutzschäume, die für Anwendungen mit noch offener Gebäudehülle vorgesehen sind.

Vorgeformte geschäumte Brandschutzelemente werden üblicherweise auf Produktionsanlagen durch Mehrkomponentenextrusion und Aufschäumen in einer vordefinierten Form hergestellt. Vorgeformte geschäumte Brandschutzelemente können als Formteile verwendet oder weiterverarbeitet werden.

Die sogenannte Off-Site Herstellung von geschäumten Brandschutzelementen auf großen Produktionsanlagen bedingt, dass produktionsrelevante Eigenschaften wie Entformungszeit, Schaumstoffweichheit und Bruchverformung unter Kompression eine zentrale Rolle spielen.

Aufgabe der Erfindung ist es daher, ein Reaktionsgemisch zur Herstellung von vorgeformten, geschäumten Brandschutzelementen bereitzustellen, welches in der Herstellung ohne den Einsatz von Isocyanaten auskommt und damit die aus dem Stand der Technik bekannten Polyurethan-basierten Brandschutzelemente unter HSE-Gesichtspunkten übertrifft. Die Brandschutzeigenschaften von daraus hergestellten Brandschutzelementen soll dabei mindestens vergleichbar sein mit den Brandschutzeigenschaften von aus dem Stand der Technik bekannten Brandschutzelementen auf Basis von Polyurethan. Insbesondere sollen die erfindungsgemäßen Brandschutzelemente eine verbesserte Wasserbeständigkeit gegenüber aus dem Stand der Technik bekannten Brandschutzelementen aufweisen, so dass Anwendungen bei noch offener Gebäudehülle möglich sind.

Die der Erfindung zu Grunde liegende Aufgabe wird gelöst durch ein Reaktionsgemisch gemäß Anspruch 1.

Das Reaktionsgemisch umfasst
i. mindestens ein alkoxysilanfunktionelles Polymer, welches mit alkoxyfunktionellen Silangruppen der allgemeinen Formel (I) terminiert ist und/oder alkoxyfunktionelle Silangruppen der allgemeinen Formel (I) als Seitengruppen entlang der Polymerkette aufweist

   -X-R³-Si(R¹)ₘ(OR²)₃₋ₘ (I),

   worin R¹ für einen linearen oder verzweigten C₁-C₁₆-Alkylrest steht,
   R² für -H oder für einen linearen oder verzweigten C₁-C₆-Alkylrest steht,
   R³ für einen Alkylrest steht,
   m für eine ganze Zahl von 0 bis 2 steht,
ii. mindestens ein dämmschichtbildendes Brandschutz-Additiv
iii. mindestens ein Treibmittel,
iv. mindestens einen Katalysator und
v. mindestens ein Vernetzungsmittel,
dadurch gekennzeichnet, dass das alkoxysilanfunktionelle Polymer ein Grundgerüst umfasst ausgewählt aus der Gruppe bestehend aus Polyurethan, Polyether und Mischungen daraus und
dass X für -O-, eine Urethangruppe -HNCOO oder für eine Harnstoffgruppe -NHCONR⁴ mit R⁴ = Wasserstoff, Alkyl oder Aryl steht.

Ein zweiter Gegenstand der Erfindung ist auch ein Verfahren zur Herstellung eines vorgeformten Brandschutzelements.

Ein dritter Gegenstand der Erfindung ist ferner ein aus dem erfindungsgemäßen Reaktionsgemisch oder ein durch das erfindungsgemäße Verfahren hergestelltes Brandschutzelement.

Ein vierter Gegenstand der Erfindung ist auch ein Bauteil umfassend ein erfindungsgemäßes Brandschutzelement.

Zum besseren Verständnis der Erfindung werden die folgenden Erläuterungen der hierin verwendeten Terminologie als sinnvoll erachtet. Im Sinne der Erfindung bedeutet:
- *"Reaktionsgemisch"* ist eine Zusammensetzung, umfassend mindestens ein mindestens ein alkoxysilanfunktionelles Polymer, welches terminiert und/oder als Seitengruppen entlang der Polymerkette alkoxyfunktionelle Silangruppen der allgemeinen Formel (I) aufweist, mindestens ein dämmschichtbildendes Brandschutz-Additiv, mindestens ein Treibmittel, mindestens einen Katalysator und mindestens ein Vernetzungsmittel. Dem Fachmann ist bekannt, dass beim Zusammenführen der einzelnen Bestandteile des Reaktionsgemisches sowohl eine Härtungs- als auch eine Schäumungsreaktion eintritt. Mit dem Begriff Reaktionsgemisch im Sinne der vorliegenden Erfindung sind daher alle Reaktionszustände von der initialen Mischung der Bestandteile bis zum Ablauf der vollständigen Härtungsreaktion umfasst.
- *"chemische Intumeszenz"* die Bildung einer voluminösen, isolierenden Ascheschicht durch aufeinander abgestimmte Verbindungen, die bei Hitzeeinwirkung miteinander reagieren;
- *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- "*dämmschichtbildend*", dass im Brandfall ein fester mikroporöser Schaum entsteht, so dass die gebildete feinporige und dicke Schaumschicht, die sogenannte Aschekruste, je nach Zusammensetzung ein Substrat gegen Hitze isoliert;
- Treibmittel ein Sammelbegriff für physikalische und chemischer Treibmittel. Im Falle von chemischen Treibmitteln werden Treibmittelmischungen eingesetzt, die mindestens zwei Komponenten umfassen, die bei Kontaktierung miteinander die Bildung von Gasen als Treibmitteln hervorrufen, was zur Schäumung der Zusammensetzung führt.
- *"ein", "eine", "einer"* als Artikel vor einer chemischen Verbindungsklasse, z.B. vor dem Wort "*alkoxysilanfunktionelles Polymer*", dass eine oder mehrere unter diese chemische Verbindungsklasse fallende Verbindungen, z.B. verschiedene alkoxysilanfunktionelle Polymere gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;

Durch die Verwendung des alkoxysilanfunktionellen Polymers in der Reaktionsmischung kann auf die Verwendung von gesundheitsgefährdenden und kennzeichnungspflichtigen Isocyanaten vollständig verzichtet werden kann. Die Spezifikation des Polymergrundgerüstes und die Spezifikation eines Linkers zur Anbindung der alkoxysilanfunktionellen Gruppen an das Grundgerüst des Polymers ermöglicht es, die Wasserbeständigkeit von Brandschutzelementen zu verbessern.

Das erfindungsgemäße Reaktionsgemisch umfasst mindestens ein alkoxysilanfunktionelles Polymer, welches mit alkoxyfunktionellen Silangruppen der allgemeinen Formel (I) terminiert ist und/oder diese als Seitengruppen entlang der Polymerkette aufweist

-X-R³-Si(R¹)ₘ(OR²)₃₋ₘ (I),

worin R¹ für einen linearen oder verzweigten C₁-C₁₆-Alkylrest, bevorzugt für einen Methyl- oder Ethylrest, R² für -H oder einen linearen oder verzweigten C₁-C₆-Alkylrest, bevorzugt für einen Methyl- oder Ethylrest, und m für eine ganze Zahl von 0 bis 2, bevorzugt 0 oder 1 steht. Am stärksten bevorzugt sind die mindestens zwei alkoxyfunktionellen Silangruppen di- (m = 1) oder trifunktionell (m = 0) und die Alkoxygruppe ist eine Methoxy- oder Ethoxygruppe.

R³ stellt einen linearen oder verzweigten Alkylrest dar, der mindestens ein Kohlenstoffatom aufweist. Bevorzugt ist R³ ein C₁ bis C₆-Alkylrest, besonders bevorzugt ein C₁ bis C₃-Alkylrest, ganz besonders bevorzugt ein Methylenrest.

Erfindungsgemäß umfasst das alkoxysilanfunktionelle Polymer ein Grundgerüst, das aus der Gruppe bestehend aus einem Polyurethan, Polyether oder Mischungen daraus ausgewählt ist. Dies bedeutet, dass das Grundgerüst des alkoxysilanfunktionellen Polymers ein Polyetherhomopolymer oder ein Polyurethanhomopolymer darstellt oder dass das Grundgerüst des alkoxysilanfunktionellen Polymers ein Copolymer ist, welches aus Ether- und Urethaneinheiten gebildet ist. Das Grundgerüst kann dabei linear oder verzweigt (lineares Grundgerüst mit Seitenketten entlang der Kette des Grundgerüstes) aufgebaut sein und enthält terminierend, d.h. als Endgruppen eines linearen Grundgerüstes bzw. als Endgruppen des verzweigten Grundgerüstes und als Endgruppen der Seitengruppen, alkoxyfunktionelle Silangruppen, bevorzugt mindestens zwei alkoxyfunktionelle Silangruppen.

Im Sinne der vorliegenden Erfindung ist ein Polymer ein Molekül mit sechs oder mehr Wiederholungseinheiten, das eine Struktur aufweisen kann, die linear, verzweigt, sternförmig, gewunden, hyperverzweigt oder vernetzt sein kann. Polymere können eine einzelne Art von Wiederholungseinheiten aufweisen ("Homopolymere") oder sie können mehr als eine Art von Wiederholungseinheiten aufweisen ("Copolymere").

Erfindungsgemäß ist die alkoxyfunktionelle Silangruppe über eine Gruppe X, an das Grundgerüst des alkoxysilanfunktionellen Polymers gebunden. Für den Fall, dass X eine Urethan- oder eine Harnstoffgruppe darstellt und R³ eine Methylgruppe darstellt, wird eine elektronische Wechselwirkung (Back-Bonding) zwischen dem Siliziumatom und dem Elektronendonor bedingt, wobei Elektronendichte vom Donor auf das Siliziumatom verschoben wird, was zu einer Schwächung der Si-O-Bindung führt, das sich wiederum in einer stark erhöhten Reaktivität der Si-Alkoxygruppen niederschlägt. Hierbei handelt es sich um den sogenannten α-Effekt. Solche Verbindungen werden auch als α-Silane bezeichnet. Daneben können aber auch sogenannte γ-Silane oder andersartige Silane verwendet werden.

Erfindungsgemäß steht X für -O-, eine Urethangruppe -HNCOO oder für eine Harnstoffgruppe -NHCONR⁴ mit R⁴ = Wasserstoff, Alkyl oder Aryl. Für den Fall, dass das alkoxysilanfunktionelle Polymer mehr als eine alkoxyfunktionelle Silangruppe enthält, werden die Gruppen X unabhängig voneinander ausgewählt. In einer bevorzugten Ausführungsform sind alle Gruppen X eines alkoxyfunktionellen Polymers entweder Urethangruppen oder Harnstoffgruppen.

Beispiele geeigneter Polymere umfassen silanterminierte Polyether (z.B. Geniosil^{®} STP-E 10, Geniosil^{®} STP-E 30 und Geniosil^{®} STP-E 35 von Wacker Chemie AG; Desmoseal S XP 2744, Desmoseal S XP 2636, Desmoseal S XP 2458, Desmoseal S XP 2749 von der Fa. Covestro, Polymer ST 77, Polymer ST 61, Polymer ST 61 LV, Polymer ST 80, Polymer ST 81 von der Fa. Evonik, SPUR+ 1012 prepolymer, SPUR+ 1015 prepolymer, SPUR+ 1050 prepolymer, SPUR+ 1060 prepolymer, SPUR+ 3030 prepolymer, SPUR+ 3040 prepolymer, SPUR+ 3060 prepolymer von der Fa. Momentive und Si-PolyU XP 4020-1, Si-PolyU XP 2550-1 und Si-PolyU XP 5013-1 von der PolyU GmbH.

Das alkoxysilanfunktionelle Polymer kann auch ein Gemisch aus zwei oder mehreren der vorhergehend beschriebenen Polymeren sein, die gleichartig oder unterschiedlich sein können.

Vorzugsweise weist das alkoxysilanfunktionelle Polymer eine dynamische Viskosität von 60 bis 0.1 Pas, bevorzugt von 25 bis 0.3 Pas auf. Die dynamische Viskosität wird bestimmt durch DMA (dynamisch mechanische Analyse) mit Hilfe eines Rheometers.

Vorzugsweise hat das alkoxysilanfunktionelle Polymer ein zahlenmittleres Molekulargewicht im Bereich von 500 bis 20.000 g/mol, vorzugsweise von 1.000 bis 8.000 g/mol.

In einer Ausführungsform der Erfindung umfasst das Reaktionsgemisch neben dem alkoxysilanfunktionellen Polymer mindestens ein weiteres alkoxysilanfunktionelles Polymer, welches mit alkoxyfunktionellen Silangruppen der allgemeinen Formel (II) terminiert ist und/oder diese als Seitengruppen entlang der Polymerkette aufweist

-R⁷-Si(R⁵)ₘ(OR⁶)₃₋ₘ (II),

worin
R⁵ für einen linearen oder verzweigten C₁-C₁₆-Alkylrest, bevorzugt einen C₁-Alkylrest,
R⁶ für -H oder einen linearen oder verzweigten C₁-C₆-Alkylrest, bevorzugt einen C₁-Alkylrest,
R⁷ für einen linearen oder verzweigten C₁ bis C₆-Alkylrest und
m für eine ganze Zahl von 0 bis 2, bevorzugt 0 oder 1 steht.

Das weitere alkoxysilanfunktionelle Polymer weist im Gegensatz zum alkoxysilanfunktionellen Polymer keine Urethan- oder Harnstoffgruppen auf, die die alkoxyfunktionellen Silangruppen mit dem Polymergrundgerüst verbinden.

Vorzugsweise umfasst das weitere alkoxysilanfunktionelle Polymer ein Grundgerüst, das aus der Gruppe bestehend aus Poly(meth)acrylat und Polyether ausgewählt ist.

Vorzugsweise weist das weitere alkoxysilanfunktionelle Polymer eine geringere dynamische Viskosität auf als das alkoxysilanfunktionelle Polymer, bevorzugt bis zu 20 Pas, insbesondere bis zu 15 Pas, weiter bevorzugt bis zu 5 Pas.

Vorzugsweise hat das weitere alkoxysilanfunktionelle Polymer ein geringeres zahlenmittleres Molekulargewicht als das alkoxysilanfunktionelle Polymer, bevorzugt bis 20.000 g/mol, insbesondere im Bereich von 500 bis 10.000 g/mol.

Beispiele geeigneter weiterer alkoxysilanfunktioneller Polymere umfassen Kaneka MS Polymer^{™} S203H, Kaneka MS Polymer^{™} S303H, Kaneka Silyl^{®} SAX260, Kaneka Silyl^{®} SAX350, Kaneka Silyl^{®} SAX530, Kaneka Silyl^{®} SAX590, Kaneka Silyl^{®} SAT010, Kaneka Silyl^{®} SAX015, Kaneka Silyl^{®} SAX115, Kaneka Silyl^{®} SAT145 von der Fa. Kaneka.

Gewöhnlich beträgt die Menge aller alkoxysilanfunktionellen Polymere im Reaktionsgemisch 10 bis 90 Gew.-%, bevorzugt 15 bis 85 Gew.-%, stärker bevorzugt 20 bis 80 Gew.-%, jeweils bezogen auf das Gesamtwicht des Reaktionsgemischs.

Erfindungsgemäß enthält das Reaktionsgemisch ein Vernetzungsmittel, insbesondere mindestens ein Vinylalkoxysilan wie beispielsweise Vinyltrimethoxysilan. In einer besonders bevorzugten Ausführungsform wird das Vinylalkoxysilan in Kombination mit Wasser eingesetzt.

Der Wassergehalt des Reaktionsgemischs beträgt bevorzugt zwischen 0.1 und 20 Gew.-%, stärker bevorzugt zwischen 0.5 und 10 Gew.-%, bezogen auf das gesamte Reaktionsgemisch.

Erfindungsgemäß enthält das Reaktionsgemisch ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die unter Hitzeeinwirkung aufblähen und eine isolierende Schicht aus schwerentflammbarem Material bilden. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils allein oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-Polyole, PO-Polyole sowie EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich im Reaktionsgemisch enthalten sein, nämlich bevorzugt in einer Menge von 10 bis 70 Gew.-% bezogen auf das Gesamtgewicht des Reaktionsgemischs. Wird die isolierende Schicht durch physikalische Intumeszenz gebildet, ist das dämmschichtbildende Additiv vorzugsweise in einer Menge von 10 bis 45 Gew.-% bezogen auf das Gesamtgewicht des Reaktionsgemischs enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 5 bis 50 Gew.-% und besonders bevorzugt 10 bis 45 Gew.-%, bezogen auf das Gesamtgewicht des Reaktionsgemischs.

Da die im Brandfall gebildete Aschekruste in der Regel zu instabil ist und abhängig von deren Dichte und Struktur etwa durch Luftströmungen Verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von <50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können dem erfindungsgemäßen Reaktionsgemisch ein oder mehrere Flammschutzmittel zugesetzt werden, wie Phosphatester, halogenhaltige Verbindungen wie z.B. Tri-(2-chlorisopropyl)-phosphat (TOPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

Erfindungsgemäß enthält das Reaktionsgemisch ein Treibmittel. Als Treibmittel kommen prinzipiell alle dem Fachmann bekannten chemischen und physikalischen Treibmittel in Betracht. Hierzu zählen insbesondere chemische Treibmittel, die in der Lage sind CO₂ oder H₂ freizusetzen. Dementsprechend enthält das Reaktionsgemisch vorzugsweise eine Treibmittelmischung, welche Verbindungen umfasst, die nach deren Vermischen unter Bildung von Kohlendioxid (CO₂), Wasserstoff (H₂) oder Sauerstoff (O₂) miteinander reagieren.

Vorzugsweise enthält das Reaktionsgemisch als Treibmittel mindestens eine Treibmittelmischung, welche ein oder mehrere Verbindungen umfasst, die in der Lage sind durch Reaktion Wasserstoff (H₂) freizusetzen.

Hierzu kann die Reaktion zwischen folgenden Verbindungen eingesetzt werden:
(i) einem oder mehreren unedlen Metallen (z.B. Aluminium, Eisen oder Zink) mit Basen (z.B. ein oder mehrere Alkalimetallhydroxide, wie Natrium-, Kalium- oder Lithiumhydroxid) oder mit ein oder mehreren Säuren, wie oben bei den Carbonaten definiert (vorzugsweise anorganische Säure);
(ii) Metallhydriden (z.B. Natriumhydrid oder Lithiumaluminiumhydrid) mit Wasser, oder
(iii) einer Verbindung, die Si-gebundene Wasserstoffatome aufweist (z.B. Polymethylhydrogensiloxan, bekannt auch als Polymethylhydrosiloxan, aber auch andere Polyalkyl- oder Polyarylhydrogensiloxane) mit Protonendonoren (z.B. Wasser). Geeignet sind u.a. lineare Polyhydrogensiloxane, Tetramere, Copolymere von Dimethysiloxan und Methylhydrosiloxan, Trimethylsilylterminierte Polyhydrogensiloxane, Hydrid-terminierte Polydimethylsiloxane, Triethylsilyl-terminierte Polyethylhydrosiloxane, Hydrid-terminierte Copolymere aus Polyphenylmethylsiloxan und Methylhydrosiloxan und dergleichen.

Hierbei ist die Verwendung einer Treibmittelmischung umfassend eine Verbindung, die Si-gebundene Wasserstoffatome aufweist bevorzugt. Besonders geeignete Si-H-haltige Verbindungen sind Organowasserstoffsiloxane wie Poly(methylhydrogensiloxan) (PMHS) mit unterschiedlichen Mw-Werten. Kommerziell erhältlich sind hier beispielsweise SilForce SS4300C (Momentive) und BLUESIL WR 68 (Elkem-Silikone).

Geeignete Protonendonatoren sind z. B. Wasser und OH-haltige Verbindungen, insbesondere solche mit geringerem Molekulargewicht wie z. B. Methanol, Ethanol, Propanol, Butanol, Pentanol, Hexanol, Heptanol, verwandte Diole wie z. B. (Tri)ethylenglykol und Propylenglykol, verwandte cyclische und aromatische Alkohole und Diole wie z. B. Cyclohexanol und Benzylalkohol sowie Mischungen davon).

Erfindungsgemäß umfasst das Reaktionsgemisch auch einen Katalysator, der sowohl die Reaktion der alkoxyfunktionellen Silangruppe mit Wassser, die anschließende Kondensation des so entstandenen Silanols als auch die Schäumungsreaktion begünstigt. Hierbei werden vorteilhaft keine metallbasierten Katalysatoren eingesetzt, da diese auch häufig gesundheitsgefährdend und kennzeichnungspflichtig unter HSE-Gesichtspunkten sind.

In einer bevorzugten Ausführungsform der Erfindung umfasst das Reaktionsgemisch eine organische Base als Katalysator. Dies begünstigt vorteilhaft das Schäumen und Aushärten des Reaktionsgemischs. Organische Basen sind vorteilhaft gegenüber anorganischen Basen, da sie üblicherweise nicht in Wasser gelöst werden müssen.

Bevorzugt ist die organische Base als Katalysator in einer Menge von > 0 - 10 Gew.-%, insbesondere 1-5 Gew.-%, im Reaktionsgemisch enthalten bezogen auf das Gesamtgewicht des Reaktionsgemischs.

Bevorzugt ist die organische Base ausgewählt aus 1,1,3,3-tetramethylguanidine (TMG), 1-Phenylguanidin, 1,3-Diphenylguanidin, 1-(o-Tolyl)biguanide, 1,5-diazabicyclo [4.3.0]-non-5-ene (DBN), 1,8-Diazabicyclo¬[5.4.0]-undec-7-ene (DBU), *N,N,N',N'*-Tetrakis(2-Hydroxypropyl)ethylenediamine (Quadrol^{®}), 1,4-diazabicyclo[2.2.2]octane (DABCO), 4-Dimethylaminopyridine (DMAP), N,N,N',N",N"-Pentamethyldiethylenetriamine (PMDETA), Triethylamin, Tributylamin und Trioctylamin.

Sofern erforderlich kann das erfindungsgemäße Reaktionsgemisch ferner einen Zellregulatur/-stabilisator enthalten. Als Zellregulaturen/-stabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1-Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Polyether-Polysiloxane, Ester der Sulfobernsteinsäure und/oder Alkali- oder Erdalkalimetallalkanoate eingesetzt. Besonders bevorzugt werden EO/PO-Blockcopolymere eingesetzt.

In einer Ausführungsform enthält das Reaktionsgemisch ferner mindestens einen weiteren Bestandteil, ausgewählt unter Weichmachern, Vernetzungsmitteln, Bioziden, organischen und/oder anorganischen Zuschlagstoffen und/oder weiteren Additiven.

Das Reaktionsgemisch kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Das erfindungsgemäße Reaktionsgemisch eignet sich in hervorragender Weise zur Herstellung von vorgeformten Brandschutzelementen.

Ein weiterer Gegenstand der vorliegenden Erfindung ist daher auch ein Verfahren zur Herstellung eines vorgeformten Brandschutzelements umfassend:
i. Bereitstellen folgender Bestandteile:
   a. mindestens ein alkoxysilanfunktionelles Polymer, welches mit alkoxyfunktionellen Silangruppen der allgemeinen Formel (I) terminiert ist und/oder alkoxyfunktionelle Silangruppen der allgemeinen Formel (I) als Seitengruppen entlang der Polymerkette aufweist

      -X-R³-Si(R¹)ₘ(OR²)₃₋ₘ (I),

      worin R¹ für einen linearen oder verzweigten C₁-C₁₆-Alkylrest,
      R² für -H oder einen linearen oder verzweigten C₁-C₆-Alkylrest,
      R³ für einen Alkylrest steht
      m für eine ganze Zahl von 0 bis 2 steht,
      X für -O-, eine Urethangruppe -HNCOO oder für eine Harnstoffgruppe-NHCONR⁴ mit R4 = Wasserstoff, Alkyl oder Aryl steht und das Grundgerüst des Polymers ausgewählt ist aus der Gruppe bestehend aus Polyurethan und Polyether,
   b. mindestens ein dämmschichtbildendes Brandschutz-Additiv
   c. mindestens ein Treibmittel und
   d. mindestens ein Vernetzungsmittel
ii. Mischen der unter i. genannten Bestandteile und Zugabe mindestens eines Katalysators zur Herstellung eines Reaktionsgemischs,
iii. Austragen des Reaktionsgemisches in eine Form oder eine Folie mit vordefinierter Geometrie;
iv. Aufschäumen und Härten des Reaktionsgemisches und
v. Entfernen des aufgeschäumten und ausgehärteten Reaktionsgemisches aus der Form oder der Folie.

Für das erfindungsgemäße Verfahren gelten in Bezug auf das alkoxyfunktionelle Polymer, das dämmschichtbildende Additiv, die Treibmittelmischung, den Katalysator und das Vernetzungsmittel die vorstehenden Ausführungen in Bezug auf das Reaktionsgemisch in gleichem Maße.

In einer bevorzugten Ausführungsform der Erfindung erfolgt das Mischen der Komponente A) und der Härterkomponente B) in einem Mischkopf.

Ein weiterer Gegenstand der vorliegenden Erfindung ist auch ein aus der erfindungsgemäßen Reaktionsmischung oder ein durch das erfindungsgemäße Verfahren hergestelltes Brandschutzelement. Unter dem Begriff "Brandschutzelement" im Sinne der vorliegenden Erfindung sind sämtliche Brandschutzabschottungsmaterialien in Gestalt eines definierten Formkörper zu verstehen, welche zum Schutz eines Feuerübertritts im Brandfall in eine Durchgangsöffnungen in Bauelementen, insbesondere Gebäudebauteilen, wie Wände und Decken, eingebracht werden. Hierzu zählen beispielsweise Brandschutzkissen, Brandschutzsteine und Profilelemente.

Das erfindungsgemäße Brandschutzelement eignet sich durch seine Wasserbeständigkeit in besonderem Maße zum Einsatz in noch offenen Gebäudehüllen. In offenen Gebäudehüllen sind die Brandschutzelemente den Witterungsbedingungen, wie Regen, in besonderem Maße ausgesetzt.

Das Brandschutzelement hat vorzugsweise einen rechteckigen Querschnitt. Dadurch lassen sich die Brandschutzelemente besonders einfach und lückenlos in einem Wand- oder Deckendurchbruch verarbeiten.

Die Brandschutzelemente können auf eine Länge von beispielsweise 80 cm zugeschnitten werden, um ein einfaches Handling beim Verpacken und beim Transport zu ermöglichen. Vor der Installation können die Profilstücke von einem Benutzer bei Bedarf zu kürzeren Stücken zugeschnitten werden.

Ebenfalls Gegenstand der Erfindung ist ein Bauteil umfassend ein erfindungsgemäßes, Brandschutzelement.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

### Liste der in den Beispielen und Referenzen verwendeten Bestandteile (Erklärung der Abkürzungen) sowie ihrer Handelsnamen und Bezugsquellen:

**Tabelle 1: Zusammenstellung der in den Beispielen verwendeten Bestandteile**

| | Beschreibung |
|---|---|
| Si-PolyU XP 5013-1 | Modifiziertes Silanpolymer mit Polyurethan Grundgerüst |
| | Viskosität: 10.000 - 17.000 mPas |
| Desmoseal^{®} S XP 2821 | Modifiziertes Silanpolymer |
| | Viskosität: 20.000 mPas |
| Kaneka MS Polymer^{™} SAT010 | Silan-terminiertes Polyurethan-Polyether-Polymer |
| | M: 5000 - 7000 g/mol, Viscosität: 650 mPas |
| Kaneka MS Polymer^{™} SAX015 | Dimethoxymethylsiliyl-terminierter Polyether |
| | M: 4000 - 6000 g/mol, Viscosität: 500 mPas |
| Polymethylhydrosiloxan | Bestandteil der Treibmittelmischung zur |
| | Generierung von H₂ |
| 1,1,3,3-Tetramethylguanidine | Organischer Katalysator |
| Dynasylan VTMO | Wasserfänger/Vernetzunsgmittel |
| Ortegol 500 | Silikonfreier Zellöffner |
| | Evonik Nitrition & Care GmbH |
| Brandschutzfüllstoffmischung | Blähgraphit mit Pigment und Fungizid |

Die Vergleichsbeispiele und die Ausführungsbeispiele wurden entsprechend der Komponenten gemäß Tabelle 2 hergestellt. Zur Herstellung eines Schaums wurde eine entsprechende Menge der angegebenen Komponenten nacheinander in einem geeigneten Behälter (z.B. Pappbecher) mit einem Holzspatel bis zur Ausbildung einer homogenen Mischung mechanisch verrührt. Das so entstandene Reaktionsgemisch wurde in eine Form gegossen und man ließ das Reaktionsgemisch aufschäumen.

**Tabelle 2: Zusammensetzung der Vergleichsbeispiele 1 bis 2 und der erfindungsgemäßen Beispiele 1 bis 4 [in Gew.-%]**

| **Beispiel** | **Vergleichsbeispiel 1** | **Vergleichsbeispiel 2** | **Beispiel 1** | **Beispiel 2** | **Beispiel 3** | **Beispiel 3** |
|---|---|---|---|---|---|---|
| Si-PolyU XP 5013-1 | - | - | 50% | 50% | 62% | 27% |
| Desmoseal^{®} S XP 2821 | 4825% | 50% | - | - | - | 0% |
| Kaneka MS Polymer^{™} SAT010 | 15.75% | - | - | 12% | - | 0% |
| Kaneka MS Polymer^{™} SAX015 | - | 12% | 12% | - | - | 35% |
| 1,1,3,3-Tetramethyl-guanidine (TMG) | 4% | 4% | 4% | 4% | 4% | 4% |
| Wasser | 4% | 4% | 4% | 4% | 4% | 4% |
| Polymethylhydrosiloxan (PHMS) | 2% | 3% | 3% | 3% | 3% | 3% |
| Dynasylan VTMO | 1% | 1% | 1% | 1% | 1% | 1% |
| Ortegol 500 | - | 1% | 1% | 1% | 1% | 1% |
| Brandschutzfüllstoffmischung | 25% | 25% | 25% | 25% | 25% | 25% |

**Tabelle 3: Darstellung der Ergebnisse zur Wasseraufnahme und zum Massenverlust der Vergleichsbeispiele und der Beispiele.**

| | **Vergleichsbeispiel 1** | **Vergleichsbeispiel 2** | **Beispiel 1** | **Beispiel 2** | **Beispiel 3** | **Beispiel 4** |
|---|---|---|---|---|---|---|
| Aufgenommenes Wasser pro Schaumvolumen nach 6 Tagen | 717 g/L | 586 g/L | 315 g/L | 343 g/L | 298 g/L | 587 g/L |
| Massenverlust nach Wasserimmersion für 6 Tage gefolgt von Trocknung für 2 Tage bei 50 °C | 9,5 % | 4,1 % | 2,6 % | 2,7 % | 2,3 | 6,1 % |
| Brandtest | | n.a | | n.a | n.a | n.a |
| E-Kabel 120 min. | bestanden | | bestanden | | | |
| PP-Rohr 120 min | bestanden | | bestanden | | | |

### Bestimmung der Wasserstabilität

Nach der Herstellung eines Schaums in einem geeigneten Behälter (z. B. einem Pappbecher) wurden zwei Kegelstümpfe mit einer Breite von 2 cm mit einer Bandsäge abgeschnitten. Das Gewicht der einzelnen Stücke wurde mit einer Waage aufgezeichnet. Nachdem der Schaum 6 Tage lang in Wasser getaucht worden war, wurde er herausgenommen und mit einem Spatel und einem Löffel umgedreht, um das Restwasser an der Oberfläche zu entfernen, und dann gewogen. Danach wurde die Probe 2 Tage lang bei 50 °C getrocknet und anschließend erneut gewogen, um den Massenverlust zu bestimmen.

### Brandtest

Es wurden 120-minütiger Brandtest gemäß EN1366-3 (Anhang B) durchgeführt. Dazu wurden Durchbrüche in einer Porenbetonwand mit den Maßen 20 cm Länge, 20 cm Breite und 20 cm Tiefe, durch die sowohl ein E-Kabel (NYY 1x185 RM-J) mit einem Durchmesser von 25 mm als auch ein PP-Rohr (Rehau Raupiano Plus 40 × 1,8 mm, U/U) verlegt wurden, mit vorgefertigten Brandschutzblöcken jeweils hergestellt aus den Reaktionsgemischen gemäß Tabelle 2 mit einer Größe von 20 cm × 13 cm × 5 cm (Einbautiefe 20 cm) abgedichtet. Lücken zwischen der Kalotte oder den Rohren und den vorgefertigten Brandschutzblöcken wurden mit einem handelsüblichen Brandschutzdichtstoff wie CFS-FIL der Fa. Hilti abgedichtet.

Die Temperatur auf der nicht brennenden Seite wurde mit Thermoelementen aufgezeichnet. Liegt der Temperaturanstieg auf der brandabgewandten Seite innerhalb von 90 bzw. 120 Minuten unter 180 K, ist die Brandprüfung nach EN 1366-3 (Anhang B) bestanden.

## Patentansprüche

1. Das Reaktionsgemisch umfasst
i. mindestens ein alkoxysilanfunktionelles Polymer, welches mit alkoxyfunktionellen Silangruppen der allgemeinen Formel (I) terminiert ist und/oder alkoxyfunktionelle Silangruppen der allgemeinen Formel (I) als Seitengruppen entlang der Polymerkette aufweist
-X-R³-Si(R¹)ₘ(OR²)₃₋ₘ (I),
worin R¹ für einen linearen oder verzweigten C₁-C₁₆-Alkylrest,
R² für -H oder für einen linearen oder verzweigten C₁-C₆-Alkylrest,
R³ für einen Alkylrest steht
m für eine ganze Zahl von 0 bis 2 steht,
ii. mindestens ein dämmschichtbildendes Brandschutz-Additiv
iii. mindestens ein Treibmittel
iv. mindestens einen Katalysator und
v. mindestens ein Vernetzungsmittel,
**dadurch gekennzeichnet, dass** das alkoxysilanfunktionelle Polymer ein Grundgerüst umfasst, ausgewählt aus der Gruppe bestehend aus Polyurethan, Polyether und Mischungen daraus und
dass X für -O-, eine Urethangruppe -HNCOO oder für eine Harnstoffgruppe - NHCONR⁴ mit R⁴ = Wasserstoff, Alkyl oder Aryl steht.

2. Reaktionsgemisch gemäß Anspruch 1, wobei das Treibmittel eine Treibmittelmischung mit Verbindungen umfasst, die nach deren Vermischen unter Bildung von Wasserstoff (H₂) miteinander reagieren.

3. Reaktionsgemisch gemäß Anspruch 1 oder 2, **dadurch gekennzeichnet, dass** das Reaktionsgemisch mindestens ein weiteres alkoxysilanfunktionelles Polymer, welches mit alkoxyfunktionelle Silangruppen der allgemeinen Formel (II) terminiert ist und/oder alkoxyfunktionelle Silangruppen der allgemeinen Formel (II) als Seitengruppen entlang der Polymerkette aufweist
-R⁷-Si(R⁵)ₘ(OR⁶)₃₋ₘ (II),
worin
R⁵ für einen linearen oder verzweigten C₁-C₁₆-Alkylrest,
R⁶ für -H oder einen linearen oder verzweigten C₁-C₆-Alkylrest
R⁷ für einen linearen oder verzweigten C₁ bis C₆-Alkylrest und,
m für eine ganze Zahl von 0 bis 2 steht.

4. Reaktionsgemisch gemäß Anspruch 3, **dadurch gekennzeichnet, dass** das Grundgerüst des weiteren alkoxysilanfunktionellen Polymers ausgewählt ist aus der Gruppe bestehend aus Poly(meth)acrylat und Polyether.

5. Reaktionsgemisch gemäß einem der vorhergehenden Ansprüche, **dadurch gekennzeichnet, dass** das alkoxysilanfunktionelle Polymer mindestens zwei alkoxyfunktionelle Silangruppen trägt.

6. Reaktionsgemisch gemäß einem der vorhergehenden Ansprüche, **dadurch gekennzeichnet, dass** das Vernetzungsmittel ein wasserhaltiger Bestandteil ist.

7. Reaktionsgemisch gemäß einem der vorhergehenden Ansprüche, **dadurch gekennzeichnet, dass** der Katalysator eine organische Base ist.

8. Reaktionsgemisch gemäß Anspruch 7, **dadurch gekennzeichnet, dass** die ausgewählt ist aus der Gruppe bestehend aus 1,4-Diazabicyclo[2.2.2]octan, 1,8-Diazabicyclo[5.4.0]undec-7-en und 1,1,3,3-Tetramethylguanidin.

9. Reaktionsgemisch gemäß einem der vorhergehenden Ansprüche, **dadurch gekennzeichnet, dass** das dämmschichtbildende Brandschutzadditiv aus Graphit-Interkallationsverbindungen, blähfähigem silikatischen Material oder Kombinationen davon ausgewählt ist.

10. Verfahren zur Herstellung eines vorgeformten Brandschutzelements umfassend:
i. Bereitstellen folgender Bestandteile:
a. mindestens ein alkoxysilanfunktionelles Polymer, welches mit alkoxyfunktionellen Silangruppen der allgemeinen Formel (I) terminiert ist und/oder alkoxyfunktionelle Silangruppen der allgemeinen Formel (I) als Seitengruppen entlang der Polymerkette aufweist
-X-R³-Si(R¹)ₘ(OR²)₃₋ₘ (I),
worin R¹ für einen linearen oder verzweigten C₁-C₁₆-Alkylrest,
R² für -H oder einen linearen oder verzweigten C₁-C₆-Alkylrest,
R³ für einen Alkylrest steht,
m für eine ganze Zahl von 0 bis 2,
X für -O-, eine Urethangruppe -HNCOO oder für eine Harnstoffgruppe-NHCONR⁴ mit R⁴ = Wasserstoff, Alkyl oder Aryl steht, und
das alkoxysilanfunktionelle Polymer ein Grundgerüst umfasst ausgewählt aus der Gruppe bestehend aus Polyurethan, Polyether sowie Mischungen daraus,
b. mindestens ein dämmschichtbildendes Brandschutz-Additiv
c. mindestens ein Treibmittel und
d. mindestens ein Vernetzungsmittel
ii. Mischen der unter i. genannten Bestandteile und Zugabe mindestens eines Katalysators zur Herstellung eines Reaktionsgemischs,
iii. Austragen des Reaktionsgemisches in eine Form oder eine Folie mit vordefinierter Geometrie;
iv. Aufschäumen und Härten des Reaktionsgemisches und
v. Entfernen des aufgeschäumten und ausgehärteten Reaktionsgemisches aus der Form oder der Folie.

11. Brandschutzelement hergestellt aus einer Reaktionsmischung gemäß einem der Ansprüche 1 bis 9 oder hergestellt durch das Verfahren gemäß Anspruch 10.

12. Brandschutzelement gemäß Anspruch 11, **dadurch gekennzeichnet, dass** das Brandschutzelement ein Brandschutzkissen, ein Brandschutzstein oder ein Profilelement ist.

13. Bauteil umfassend ein Brandschutzelement gemäß einem der Ansprüche 11 oder 12.
